# EUROPEAN PATENT SPECIFICATION

(11) **EP 4 371 388 B1**
(45) Date of publication and mention of the grant of the patent: **26.08.2026**
(21) Application number: 23210296.2
(22) Date of filing: 16.11.2023
(51) Int. Cl.: A01C 23/04, F04D 7/04, F04D 15/00

(54) **AGRICULTURAL SLURRY PUMPING ARRANGEMENT**
LANDWIRTSCHAFTLICHE GÜLLEPUMPANORDNUNG
AGENCEMENT DE POMPAGE DE LISIER AGRICOLE

(30) Priority: 18.11.2022 NL 2033560
(43) Date of publication of application: 22.05.2024
(73) Proprietor: JKL Technology GmbH, 49597 Rieste (DE)
(72) Inventor: BREMER, Antoin Antonius Hendrikus Maria, 7255 AX Hengelo (NL); BLES, Martinus Theodorus Maria, 7255 AX Hengelo (NL)
(74) Representative: Geurts, Franciscus Antonius

(56) References cited:
- WO-A1-03/083310
- DE-A1- 2 451 529
- DE-U- 1 922 762
- DE-U1- 20 008 879

## Description

### BACKGROUND

The invention relates to an agricultural slurry pumping arrangement for filling the tank of a tanker with an agricultural slurry, and a method for filling a tank of a tanker using an agricultural slurry pumping arrangement.

An agricultural slurry is a liquid that contains solid particles and that has usually a viscosity higher than water, and that is typically handled or applied in agriculture. Examples thereof are liquid or semi liquid manure that may additionally contain pollution like pieces of straw or hay, wastewater sludges, liquid biogas substrates or residues, liquid artificial manure, liquid chemical fertilizer, lime water or nitrogen containing water. Of these examples in particular liquid or semi liquid manure is hard to pump. Due to the viscosity that is higher than that of pure water or due to the solid particles that may be abrasive or flow-blocking, regular water pumps without auxiliary provisions are not applied for pumping agricultural slurries.

The agricultural slurry pumping arrangement can for instance be used in agriculture to pump slurry into the tank from an external agricultural slurry source such as a manure pit at a stable for livestock containing animal waste. For such agricultural applications the use of large centrifugal pumps is preferred as these can cope well with the abrasive or polluted slurry that needs to be pumped. Furthermore centrifugal pumps can obtain high flow rates and have a relatively simple construction which makes them easy to use, maintain and repair.

An agricultural pumping arrangement is known from DE 19 22 762 U. DE 19 22 762 U discloses a pumping device for filing a mobile tank with slurry from a fixed slurry tank or for the discharge and distribution of the slurry from the mobile tank. The pumping device comprises a pump, a priming vessel, a main vessel, and three switching valves. The pump draws slurry from the first switching valve that switches between either the mobile tank or the priming vessel. The priming vessel is connected to the fixed slurry tank via a suction line. The outlet of the pump is connected to the main vessel, which main vessel is connected to the second switching valve that switches between the priming vessel or the third switching valve. The third switching valve switches so that either the mobile tank is filled or slurry is discharged from the mobile tank and distributed.

Known pumping arrangements for filling the tank of a tanker with agricultural slurries comprise a centrifugal pump, with a pump inlet that is in fluid communication with the tank, and a pump outlet that is in fluid communication with the drive inlet of an ejector pump. The outlet of the ejector pump is connected back into the tank, and the suction port of the ejector pump is in fluid communication, by means of a pipe system, with the external agricultural slurry source. As the centrifugal pump is not self-priming it is normally unable to evacuate air from the pipe system. The known pumping arrangement solves this by leaving an amount of slurry inside the tank after emptying the tank. With this amount of slurry a slurry circulation is started in which the slurry is pumped by the centrifugal pump from the tank through the ejector back into the tank. The slurry passing through the ejector creates a vacuum in the suction port and therewith in the pipe system which evacuates the air therefrom. When the air is evacuated from the pipe system the slurry from the slurry source reaches the ejector and is pumped therethrough into the tank. Such a pumping arrangement is for example known from WO 03/083310 A1.

Alternatively the known pumping arrangement comprises a second centrifugal pump in the pipe system in series before the centrifugal pump that feeds the ejector. The pumping arrangement evacuates the air from the pipe system in the same manner as described above. The evacuating of the air from the pipe system primes the second centrifugal pump which then can be started to pump the slurry from the slurry source through the ejector into the tank.

### SUMMARY OF THE INVENTION

A disadvantage of the known pumping arrangements is that the slurry is pumped into the tank through the ejector. The ejector is fluidly connected to the outlet side or pressure side of the centrifugal pump. The centrifugal pump pumps a primary flow of slurry through the ejector which creates a secondary flow of slurry through the suction port of the ejector. The flow rate of the secondary flow is much lower than the flow rate of the primary flow, resulting in a very low efficiency of the ejector and therewith of the centrifugal pump. This low efficiency means that for a given centrifugal pump the filling time of the tank is relatively long or that for a given filling time the required pumping capacity of the centrifugal pump is relatively high.

The alternative pumping arrangement that comprises a second centrifugal pump requires two centrifugal pumps which makes the pumping arrangement more complex and more expensive. The second centrifugal pump pumps the slurry through the ejector. The narrowing in the ejector that is required to accelerate the slurry flow to generate the vacuum results in resistance to the slurry flow. This resistance leads to reduced efficiency of the centrifugal pump. This low efficiency means that for a given centrifugal pump the filling time of the tank is relatively long or that for a given filling time the required pumping capacity of the centrifugal pump is relatively high.

It is an object of the present invention to provide an agricultural slurry pumping arrangement for filling the tank of a tanker with an agricultural slurry, and a method for filling a tank of a tanker using an agricultural pumping arrangement that is self-priming and that has improved efficiency.

According to a first aspect, the invention provides an agricultural slurry pumping arrangement for filling a tank of a tanker with an agricultural slurry, wherein the pumping arrangement comprises
a centrifugal pump having an impellor, a pump inlet and a pump outlet,
a suction conduit comprising a suction conduit outlet in fluid communication with the pump inlet, a closeable inlet port configured to be in fluid communication with an external agricultural slurry source, and a suction channel extending between the suction conduit outlet and the inlet port,
a priming vessel that bounds a priming chamber for holding a priming fluid, wherein the priming chamber is in fluid communication with the suction channel,
a buffer vessel separate from the priming vessel, wherein the buffer vessel bounds a buffer chamber for buffering the priming fluid, wherein the buffer vessel comprises a buffer inlet in fluid communication with the pump outlet, a first buffer outlet that is in fluid communication with the priming chamber, and a second buffer outlet that is configured to be in fluid communication with the tank, wherein the second outlet preferably extends above the first outlet, and wherein the buffer chamber extends above the priming chamber,
wherein the centrifugal pump, the buffer vessel, the priming vessel, and the suction conduit define a priming circuit, and the agricultural slurry pumping arrangement is configured to prime the centrifugal pump by pumping the priming fluid by the centrifugal pump through the priming circuit, thereby generating an under pressure within the suction channel,
wherein the buffer chamber and the priming chamber are dimensioned to contain an amount of priming fluid that is sufficient for priming the centrifugal pump, at least during priming of the centrifugal pump.

The agricultural slurry pumping arrangement according to the invention comprises a buffer vessel that can initially be filled by the centrifugal pump by using priming fluid from the priming vessel to form the priming circuit. In this priming circuit, air that is enclosed between the inlet port and the central pump can be evacuated towards the buffer vessel. In the buffer vessel the air can escape via the second buffer outlet while the priming fluid still remains within the priming circuit under the action of gravity. This makes the agricultural slurry pumping arrangement self-priming without the use of an ejector that limits the efficiency after priming.

In an embodiment the agricultural slurry pumping arrangement comprises a priming conduit that forms a priming channel between the first buffer outlet and the priming chamber, and a priming valve for opening and closing the priming channel. The priming valve can be set open during priming, and can be closed after priming to cancel the priming circuit. With the priming circuit cancelled, the centrifugal pump pumps all the agricultural slurry directly from the inlet port to the second buffer outlet. This is highly efficient.

In an embodiment the priming vessel comprises a priming inlet towards the priming chamber, wherein the priming inlet is located at a top side of the priming chamber.

In a combined embodiment the priming conduit is connected to the priming inlet.

In a compact embodiment the suction conduit extends through the priming vessel to ensure a close distance between the agricultural slurry in the priming chamber and the suction conduit in which the agricultural slurry has to be fed towards the centrifugal pump.

In an embodiment the agricultural slurry pumping arrangement comprises a head conduit, wherein the head conduit comprises a head inlet that debouches in the priming chamber, a head outlet that debouches in the suction channel, and a head channel extending between the head inlet and the head outlet. The head conduit can ensure a smooth transport of the priming slurry from the buffer chamber into the suction conduit.

In an embodiment thereof the head conduit outlet faces towards the pump inlet to give the priming slurry a proper direction component towards the centrifugal pump.

In an embodiment the head inlet is located under the suction conduit, in a lower part of the priming chamber to ensure that the fraction inside the buffer chamber that is fed to the centrifugal pump has a high density, that is with as less enclosed air as possible.

In an embodiment the head outlet extends freely inside and is surrounded by the suction conduit.

In an embodiment the head conduit extends through the priming chamber as from the suction conduit.

In an embodiment the head conduit is enclosed inside the priming chamber.

In an embodiment the buffer vessel and the priming vessel are located outside the tank.

In an embodiment the buffer chamber has transverse to a flow direction from the buffer inlet to the second buffer outlet, a larger flow area or inner dimensions than the buffer inlet and the second buffer outlet to form a physical barrier for the priming fluid to escape via the second buffer outlet during the priming.

According to a second aspect, the invention provides a method for filling a tank of a tanker using an agricultural slurry pumping arrangement, wherein the agricultural slurry pumping arrangement comprises
a centrifugal pump having an impellor, a pump inlet and a pump outlet,
a suction conduit comprising a suction conduit outlet in fluid communication with the pump inlet, a closeable inlet port configured to be in fluid communication with an external agricultural slurry source, and a suction channel extending between the suction conduit outlet and the inlet port,
a priming vessel that bounds a priming chamber for holding a priming fluid, wherein the priming chamber is in fluid communication with the suction channel,
a buffer vessel separate from the priming vessel, wherein the buffer vessel bounds a buffer chamber for buffering the priming fluid, wherein the buffer vessel comprises a buffer inlet in fluid communication with the pump outlet, a first buffer outlet that is in fluid communication with the priming chamber, and a second buffer outlet that is configured to be in fluid communication with the tank, wherein the second outlet preferably extends above the first outlet, and wherein the buffer chamber extends above the priming chamber,
wherein the centrifugal pump, the buffer vessel, the priming vessel, and the suction conduit define a priming circuit, and the pumping arrangement is configured to prime the centrifugal pump by pumping the priming fluid by the centrifugal pump through the priming circuit, thereby generating an under pressure within the suction channel,
wherein the method comprises
by the centrifugal pump, starting and perpetuating a priming fluid circulation by pumping the priming fluid through the priming circuit to maintain an under pressure at the inlet port,
in the buffer chamber, buffering an amount of priming fluid that is sufficient to prevent air to enter the priming chamber via the first buffer outlet, and in the priming chamber, keeping an amount of priming fluid that is sufficient to prevent air in the priming chamber to enter the suction channel.

The method relates to the agricultural slurry pumping arrangement according to any one of the aforementioned embodiments and thus has at least the same technical advantages, which will not be repeated hereafter.

In an embodiment of the method, the agricultural slurry pumping arrangement comprises a priming conduit that forms a priming channel between the first buffer outlet and the priming chamber, and a priming valve for opening and closing the priming channel, wherein the method comprises the starting and perpetuating the priming fluid circulation with the priming valve open, and subsequently closing the priming valve when air is evacuated from the suction channel.

In an embodiment of the method, the priming fluid is a remainder of an agricultural slurry that was pumped in a previous pumping cycle.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figures 1A, 1B and 1C respectively are an isometric view, a side view and a front view of a tanker with an agricultural slurry pumping arrangement according to an embodiment of the invention; and
Figures 2A-2F are longitudinal section views of the tanker of figures 1A-C at different stages of a pumping cycle.

### DETAILED DESCRIPTION OF THE INVENTION

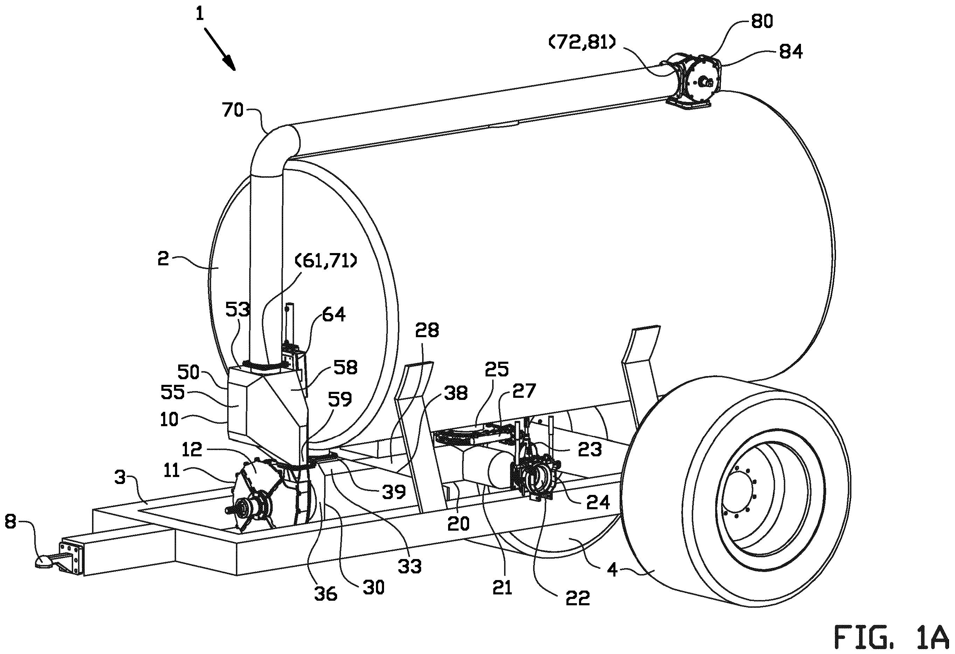

Figure 1A is an isometric view of a tanker 1, i.e. a vehicle on which a container or main tank 2 is mounted to carry agricultural slurries. The main tank 2 bounds or defines an internal main tank chamber 5 for holding the slurry. The tanker 1 comprises a support frame 3 and wheels 4 that are connected to the support frame 3 under the main tank 2 for supporting the main tank 2 on a not shown subsoil. The support frame 3 comprises a trailer hitch 8 at the front of the slurry tanker 1 to connect it to a towing vehicle such as a tractor. The tanker 1 comprises an agricultural slurry pumping arrangement 10 according to an embodiment of the invention that is fluidly connected to the main tank 2 for pumping the agricultural slurry into and/or out of the main tank 2.

An agricultural slurry is a liquid that contains solid particles and that has usually a viscosity higher than water, and that is typically handled or applied in agriculture. Examples thereof are liquid or semi liquid manure that may additionally contain pollution like pieces of straw or hay, wastewater sludges, liquid biogas substrates or residues, liquid artificial manure, liquid chemical fertilizer, lime water or nitrogen containing water. Of these examples in particular liquid or semi liquid manure is hard to pump. The tanker 1 is used to pump and transport liquid or seme liquid manure.

The tanker 1 can for instance be used to pump an agricultural slurry into the main tank 2 from an external agricultural slurry source or fluid source, and to pump the agricultural slurry out of the main tank 2 to a not shown external recipient or arrangement. The external agricultural slurry source can be a liquid manure pit at a stable for livestock containing animal waste. Such external agricultural slurry sources are often located below ground level and as such the level of the agricultural slurry in the external agricultural slurry source is lower than the level of the main tank 2. The external recipient or arrangement can for instance be an agricultural implement such as a manure spreader that is carried by the tanker 1. When the tanker 1 is towed along agricultural land by the tractor the animal waste can be spread to fertilize the land.

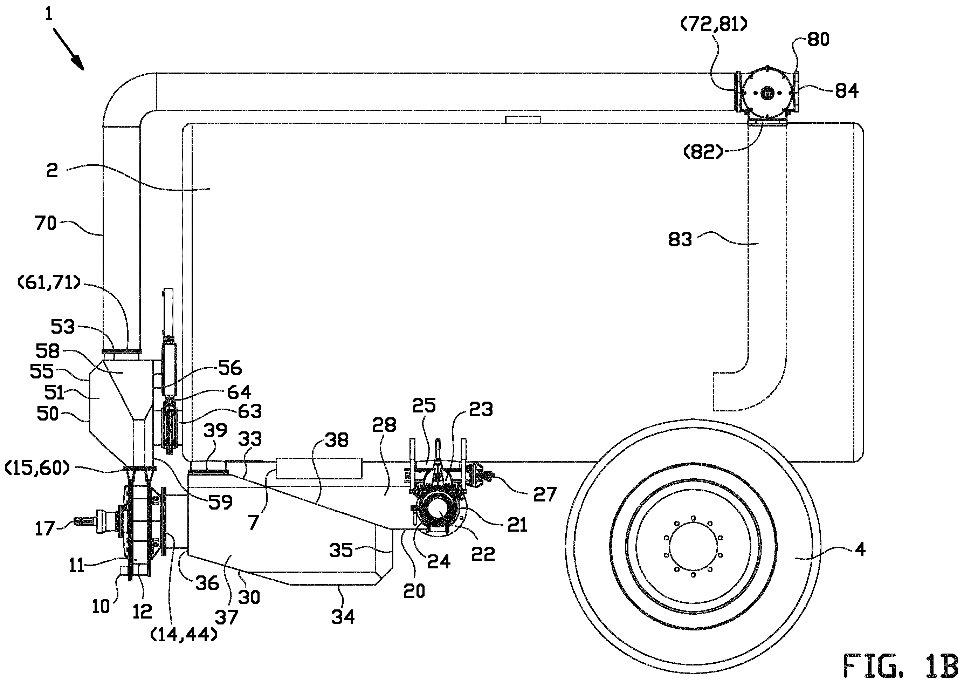

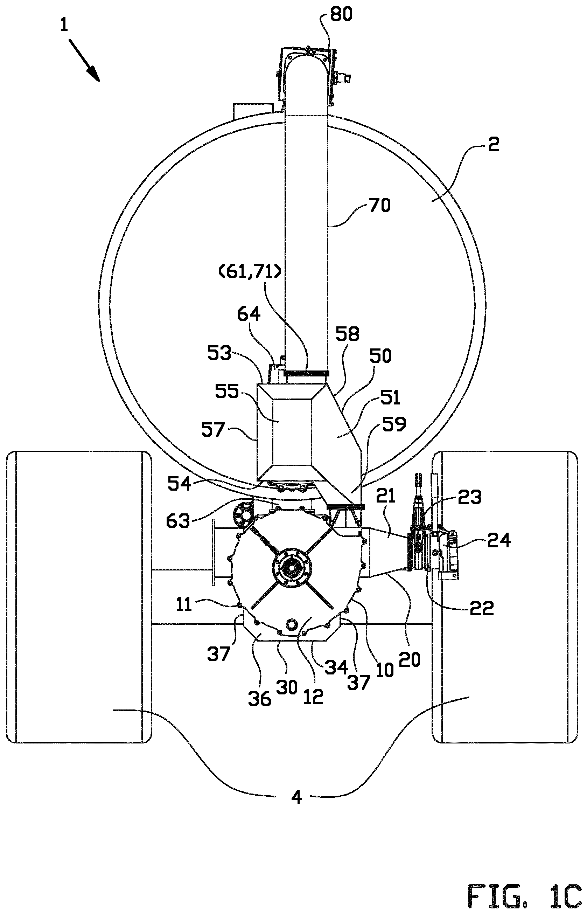

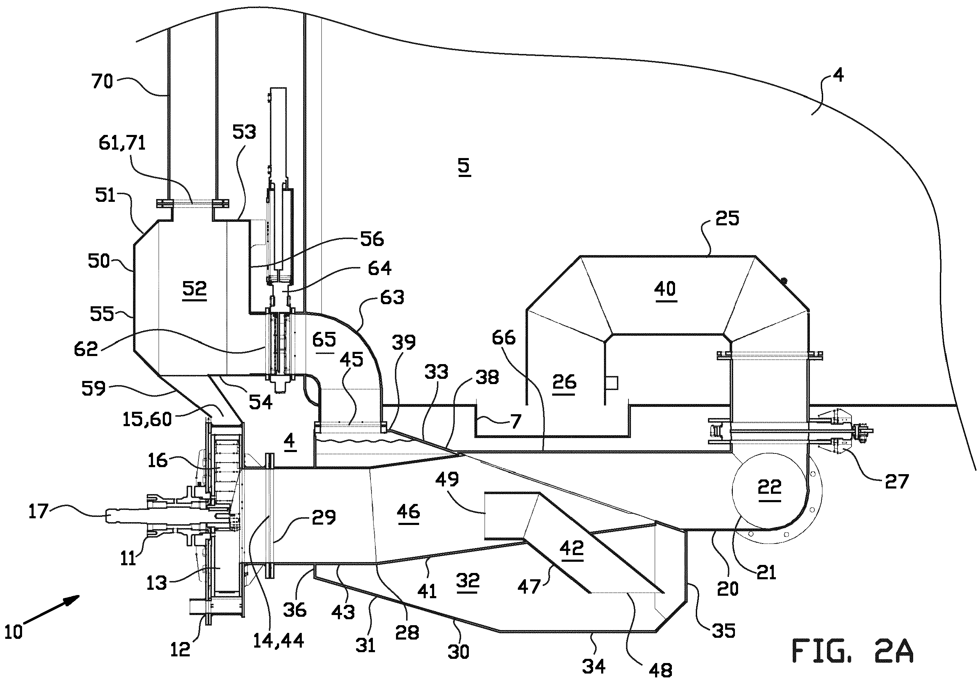

Figures 1B and 1C respectively are a side view and a front view of the tanker 1 with the support frame 3 removed for illustrative purposes only. The agricultural slurry pumping arrangement 10 of the tanker 1 comprises a centrifugal pump 11 of which the internal parts are shown in the sectional views of figures 2A-2F.

The centrifugal pump 11 of the agricultural slurry pumping arrangement 10 is known per se and comprises a pump housing 12. The pump housing 12 is connected to a priming vessel 30. The pump housing 12 defines a pump chamber 13 that merges into an axial pump inlet 14 centrally at the side of the pump housing 12, and a tangential pump outlet 15 at the top of the pump housing 12. The centrifugal pump 11 comprises an impeller 16 inside the pump chamber 13, and a driveshaft 17 that is connected to the impeller 16 and that protrudes forwards from the pump housing 12 towards the trailer hitch 8. The driveshaft 17 is configured to be connected to a not shown power source, such as the drive shaft of a power takeoff (PTO) of the tractor pulling the tanker 1, or the drive shaft 17 is connected to a not shown hydraulic motor of the tanker 1 that is hydraulically coupled with and powered by the tractor. The drive shaft 17 can drive the impeller 16 to pump the agricultural slurry from the pump inlet 14 to the pump outlet 15.

The agricultural slurry pumping arrangement 10 comprises a suction conduit 20 below the main tank 2. The suction conduit 20 is in fluid communication with the pump inlet 14 and extends partly through the priming vessel 30 below the main tank 2. The agricultural slurry pumping arrangement comprises a buffer vessel 50 in front of the main tank 2 above the centrifugal pump 11. The suction conduit 20 extend in this example in the longitudinal direction of the main tank 2.

The suction conduit 20 has a suction inlet section 21 that in this example extends towards the side of the main tank 2. The suction inlet section 21 at its distal inlet end defines a closable inlet port 22 that is configured to be in fluid communication with the external agricultural slurry source. In this example the suction inlet section 21 comprises an inlet valve 23 at the inlet port 22 that is configured to open and close the inlet port 22, and an inlet coupling 24 to fluidly connect the inlet port 22 to a not shown external conduit such as a hose or a pipe. The external conduit can form a continuation of the suction conduit 20 and is in fluid communication with the external agricultural slurry source.

The suction conduit 20 has a suction outlet section 28 that is a fluid continuation of the suction inlet section 21 and that has a distal outlet 44 that is in fluid communication with the pump inlet 14 of the centrifugal pump 11. In this example the suction outlet section 28 extends through the priming vessel 30. The suction inlet section 21 and the suction outlet section 28 of the suction conduit 20 define a suction channel 46 that extends between the distal outlet 44 and the inlet port 22. The suction channel 46 is independent of the main tank 2 and is preferably situated outside the main tank 2.

The agricultural slurry pumping arrangement 10 comprises a tank conduit 25 that at one end merges into and is in fluid communication with the suction conduit 20, in particular at or near the merger of the suction inlet section 21 and the suction outlet section 28 thereof, and that at the opposite end defines a tank suction inlet port or a tank suction inlet 26 that debouches inside and is in fluid communication with the main tank 2 and/or the main tank chamber 5 thereof. The tank conduit 25 defines a tank suction channel 40 that extends between the tank suction inlet 26 and the suction conduit 20. The agricultural slurry pumping arrangement 10 comprises a tank inlet valve 27 to open and close the tank conduit 25.

In this example the tank conduit 25 extends partly inside the main tank 2, and the tank suction inlet 26 is located inside the main tank 2 and is orientated downwards, facing the bottom of the main tank 2. More specifically the tank suction inlet 26 is positioned right above or just inside a recess 7 of the main tank 2 that forms the lowest point of the main tank 2.

The priming vessel 30 comprises a generally box shaped priming vessel shell 31 that bounds or defines an internal priming chamber 32 for containing or holding a priming fluid. The priming chamber 32 is independent of the main tank 2 and is preferably situated outside the main tank 2. The priming vessel shell 31 comprises a top wall 33, a bottom wall 34, a back wall 35, a front wall 36 and two side walls 37. The top wall 33 comprises an oblique first top wall section 38 at the back wall 35 side, and a horizontal second top wall section 39 at the front wall 36 side. The horizontal second top wall section 39 defines a priming inlet 45.

As best shown in figures 2A-2F, in this example, the suction outlet section 28 of the suction conduit 20 comprises, in series, a first part 66 that extends substantially horizontally outside the priming vessel 30, a second part 41 that extends obliquely downwards from the first top wall section 38 towards the front wall 36 inside the priming vessel 30, and a third part 43 that extends substantially horizontally from the second part 41 through the front wall 36 of the priming vessel 30 to the pump inlet 14.

The agricultural slurry pumping arrangement 10 comprises a head conduit 47, in this example inside the priming vessel shell 31, that extends through the suction conduit 20, more specifically through the second part 41 of the suction outlet section 28 thereof. The priming chamber 32 is in fluid communication with the suction channel 46, in this example through the head conduit 47. The head conduit 47 at one end defines a head inlet 48 that debouches in or is located inside the priming chamber 32, and at the opposite end defines a head outlet 49 that debouches in or is located inside the suction channel 46. The head conduit 47 defines a head channel 42 that extends between the head inlet 48 and the head outlet 49. The head inlet 48 is orientated horizontally and is located close to but at a distance from the bottom wall 34 of the priming vessel shell 31. The head outlet 49 is orientated vertically and faces towards the pump inlet 14.

The buffer vessel 50 comprises a generally box shaped buffer shell 51 that bounds or defines a buffer chamber 52 for holding, containing, or buffering the priming fluid. The buffer shell 51 comprises a top wall 53, a bottom wall 54, a back wall 56, a front wall 55, a generally straight first side wall 57, and a generally funnel shaped second side wall 58 that merges into a buffer inlet conduit 59 that extends downwards towards the centrifugal pump 11. The buffer chamber 52 is independent of the main tank 2 and is preferably situated outside the main tank 2. The buffer chamber 52 is located above the centrifugal pump 11 and higher than the priming chamber 32.

As best shown in figures 2A-2F, the buffer inlet conduit 59 at the distal end thereof defines a buffer inlet 60 that generally coincides with and is in fluid communication with the pump outlet 15. The back wall 56 of the buffer vessel 50 bounds or defines a first buffer outlet 62. The top wall 53 of the buffer vessel 50 defines a second buffer outlet 61. The agricultural slurry pumping arrangement 10 comprises a pressure conduit 70 that is in fluid communication with the pump outlet 15 and with the main tank 2.

The agricultural slurry pumping arrangement 10 comprises a priming conduit 63 that defines a priming channel 65 that extends between the priming inlet 45 of the priming vessel 30 and the first buffer outlet 62 of the buffer vessel 50. The buffer chamber 52 is in fluid communication with the priming chamber 32 through the priming conduit 63. In this example the priming conduit 63 extends through the main tank 2 and through the main tank chamber 5 thereof. The priming conduit 63 comprises a priming valve 64 that is configured to open and close the priming channel 65.

Other internal volumes of the agricultural slurry pumping arrangement 10, such as at least a part of the volume of the pressure conduit 70 or at least a part of the volume of the priming conduit 63 may contribute to the buffer chamber 52. Generally any internal volume of the agricultural slurry pumping arrangement 10 higher than the priming inlet 45 can contribute to the buffer chamber 52.

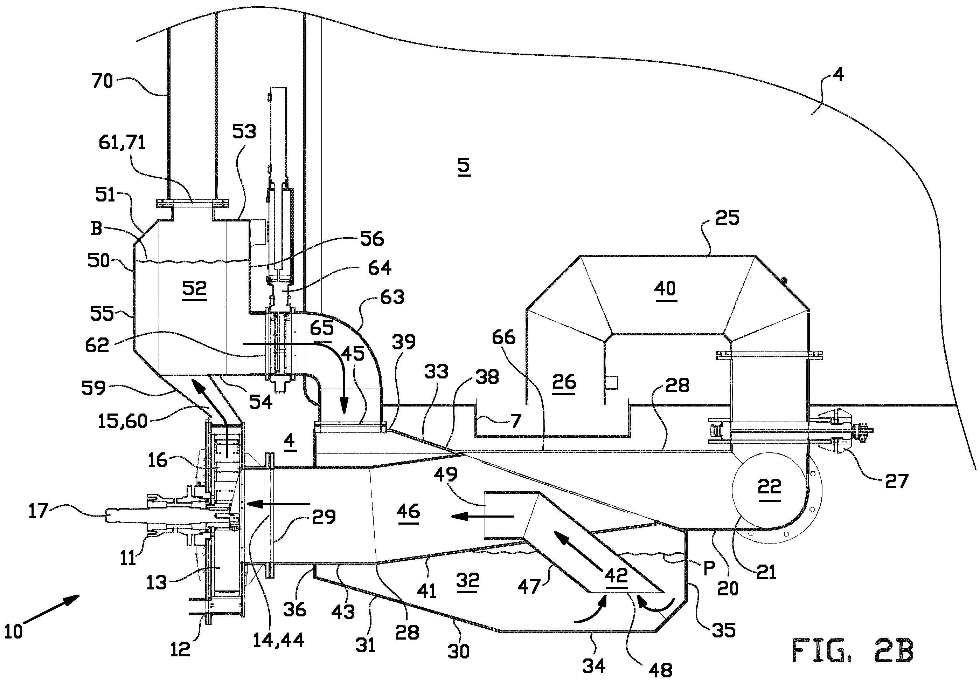

As best shown in figure 2B the centrifugal pump 11, the buffer vessel 50, the priming conduit 63, the priming vessel 30, the head conduit 47, and the suction conduit 20 define a priming circuit. The agricultural slurry pumping arrangement 10 is configured to prime the centrifugal pump 11 by pumping the priming fluid by the centrifugal pump 11 through the priming circuit, thereby generating an under pressure or vacuum within the suction conduit 20, as will be described in more detail below.

The pressure conduit 70 extends upwards from the buffer vessel 50 along the front of the main tank 2 and subsequently along the top of the main tank 2. At its proximal end the pressure conduit 70 defines a pressure conduit inlet opening 71 that is in fluid communication with the second buffer outlet 61, and at its distal end the pressure conduit 70 defines a pressure conduit outlet 72 that is in fluid communication with a valve inlet opening 81 of a two-way valve 80 on top of the main tank 2. The two-way valve 80 comprises a first valve outlet 82 that is in fluid communication with the main tank chamber 5 of the main tank 2. In this example the agricultural slurry pumping arrangement 10 comprises a filling pipe 83 inside the main tank 2 that at one end is in fluid communication with the first valve outlet 82 of the two-way valve 80 and that at the other end debouches in and is in fluid communication with the main tank chamber 5 inside the main tank 2 near the bottom thereof. The two-way valve 80 comprises a second valve outlet 84 that is configured to be fluidly connected to the not shown external recipient or arrangement.

The two-way valve 80 is switchable between a first mode in which the valve inlet opening 81 and the first valve outlet 82 are in fluid communication, and a second mode in which the valve inlet opening 81 and the second valve outlet 84 are in fluid communication. In the first mode the buffer chamber 52 of the buffer vessel 50 is in fluid communication with the main tank chamber 5 of the main tank 2 through the pressure pipe 70, the two-way valve 80 and, in this example, the filling pipe 83. In the second mode the buffer chamber 52 of the buffer vessel 50 is in fluid communication with the external recipient or arrangement through the pressure pipe 70 and the two-way valve 80.

In the description below the operation of the tanker 1 will be elucidated based on use thereof in agriculture, in particular to spread manure over the land that was collected from the manure pit. It is to be understood that the use of the tanker 1 is not limited to this agricultural application.

At the start of a filling and emptying cycle of the main tank 2, the tanker 1 is positioned by the tractor near the manure pit, and the external hose that is in fluid communication with the agricultural slurry in the manure pit is connected to the inlet coupling 24 of the suction inlet section 21 of the suction conduit 20. Because the level of agricultural slurry in the manure pit is lower than the inlet coupling 24, air is present and enclosed inside the external hose. The inlet valve 23 and therewith the inlet port 22 is closed, and the priming valve 64 is open so that the buffer chamber 52 is in fluid communication with the priming chamber 32 through the priming conduit 63. The tank inlet valve 27 is closed so that the main tank chamber 5 of the main tank 2 is not in fluid communication with the pump inlet 14 of the centrifugal pump 11. The two-way valve 80 is switched to the first mode so that the buffer chamber 52 is in fluid communication with the main tank chamber 5.

Prior to starting the agricultural slurry pumping arrangement 10, the priming chamber 32 of the priming vessel 30 is filled with the priming fluid. As the priming chamber 32, the suction conduit 20, the head conduit 47, and the pump chamber 13 of the centrifugal pump 11 are in fluid communication with each other, these are all at least partially filled with the priming fluid. Preferably, the priming chamber 32 is filled to a level at which the pump chamber 13 that is in fluid communication with the priming chamber 32 is fully filled with the priming fluid. The priming fluid preferably is agricultural slurry that was left in the priming vessel 30 after a previous emptying cycle, as will be described below. Alternatively, the priming fluid can initially be another fluid such as water which can be supplied to the pumping arrangement and/or the main tank 2 prior to a first filling of the main tank 2 when the agricultural slurry pumping arrangement 10 and/or the main tank 2 contain no or too little priming fluid.

Subsequently the centrifugal pump 11 is started by driving the driveshaft 17 by the tractor. The pumping centrifugal pump 11 generates an under pressure or vacuum at the pump inlet 14 and therewith inside the suction channel 46. The centrifugal pump 11 draws in the priming fluid from the suction channel 46, the head channel 42 and the priming chamber 32. As best shown in figure 2B, the pumping centrifugal pump 11 pumps the priming fluid into the buffer chamber 52 of the buffer vessel 50, and as a result the priming fluid inside the buffer chamber 52 rises to a buffer level B and, as the total volume of priming fluid in the agricultural slurry pumping arrangement 10 is constant, the priming fluid inside the priming chamber 32 lowers to a priming level P. Through the influence of gravity the priming fluid inside the buffer chamber 52 flows through the priming conduit 63 from the buffer chamber 52 into the priming chamber 32 of the priming vessel 30 to replenish the volume of priming fluid inside the priming chamber 32 while the centrifugal pump 11 keeps drawing in priming fluid from the suction channel 46, the head channel 42 and/or the priming chamber 32. The pumping centrifugal pump 11 therewith creates and maintains an internal self-perpetuating priming fluid circulation in which the priming fluid is pumped through the priming circuit. By the continuous flow of priming fluid through the priming circuit the generated under pressure or vacuum inside the suction channel 46 is maintained. In other words, the agricultural slurry pumping arrangement 10 is configured to prime the centrifugal pump 11 by pumping the priming fluid by the centrifugal pump 11 through the priming circuit, thereby generating an under pressure or vacuum within the suction channel 46. As the second buffer outlet 61 has a smaller flow area than the buffer chamber 52 in the upward flow direction, air that is enclosed in the buffer chamber 52 goes upwards through the empty pressure conduit 70 while the priming fluid remains enclosed in the priming circuit.

The volumes of the buffer chamber 52, the priming chamber 32 and/or the priming conduit 63 are adjusted to each other so that the priming level of the priming fluid inside the priming vessel 30 remains above the level of the head inlet 48. By maintaining the priming level of the priming fluid above the level of the head inlet 48 it is prevented that air is sucked into the head conduit 47, hereby the suction channel 46 remains sufficiently filled with priming fluid for the centrifugal pump 11 to maintain the under pressure or vacuum at the pump inlet 14. As the head inlet 48 is located low inside the priming chamber 32 close to the bottom wall 34 the possibility that gas bubbles enter the head conduit 47 is reduced. In other words the buffer chamber 52 and/or the priming chamber 32 is configured to buffer an amount of priming fluid to fill the suction channel 46 to a predetermined level that is sufficient for priming the centrifugal pump 11, at least during priming of the centrifugal pump 11.

While the priming fluid is pumped through the priming circuit, the priming fluid has a buffer residence period inside the buffer vessel 50. In the buffer residence period gas bubbles that may be present in the priming fluid can rise to the surface of the priming fluid and escape therefrom. Hereby the priming fluid settles and gets more dense and homogenic inside the buffer vessel 50 before the priming fluid flows to the priming chamber 32.

While the priming fluid is pumped through the priming circuit, the priming fluid has a priming residence period inside the priming vessel 30. In the priming residence period gas bubbles that may be present in the priming fluid can rise to the surface of the priming fluid and escape therefrom. Hereby the priming fluid settles further and gets more dense and homogenic inside the priming chamber 32 before the priming fluid flows through the head channel 42 and the suction channel 46 to the centrifugal pump 11.

The buffer chamber 52, the priming chamber 32 and/or the priming conduit 63 are configured such that the buffer residence period and/or the priming residence period of the priming fluid is long enough to let most of the gas bubbles escape from the priming fluid.

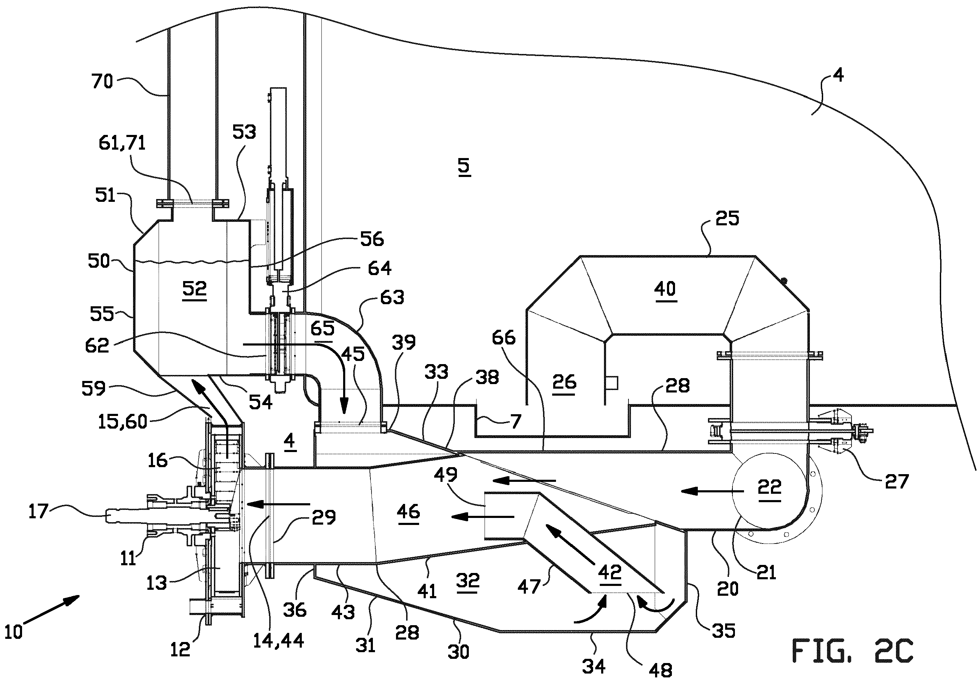

As shown in figure 2C, subsequently the inlet valve 23 and therewith the inlet port 22 of the suction conduit 20 is opened while the centrifugal pump 11 keeps pumping the priming fluid through the priming circuit. As best shown in figure 2C, as a result of the prevailing under pressure or vacuum within the suction channel 46 the agricultural slurry pumping arrangement 10 starts drawing in from the external hose through the inlet port 22. As the slurry level in the manure pit is lower than the inlet port 22 of the agricultural slurry pumping arrangement 10, the enclosed column of gas or air is present inside the external hose, firstly air is drawn in from the external hose.

The centrifugal pump 11 now simultaneously draws in priming fluid through the suction channel 46 from the head channel 42 and, and air through the suction channel 46 from the external hose. Inside the suction channel 46 the air from the external hose is added to, mixed into or absorbed by the priming fluid within the suction channel 46. The air enters and passes the centrifugal pump 11 as part of, mixed into, or absorbed in the priming fluid, as a result of which the influence of the air on the performance of the pump is reduced or minimized. The pump chamber 13 remains adequately filled with priming fluid for the centrifugal pump 11 to keep pumping the priming fluid through the priming circuit and to maintain the under pressure or vacuum at the pump inlet 14, and therewith to maintain the under pressure or vacuum at the inlet port 22. The air that is added to, mixed into or absorbed by the priming fluid in the priming circuit can escape from the priming fluid during the buffer residence period inside the buffer vessel 50 and/or during the priming residence period inside the priming vessel 30, as described above.

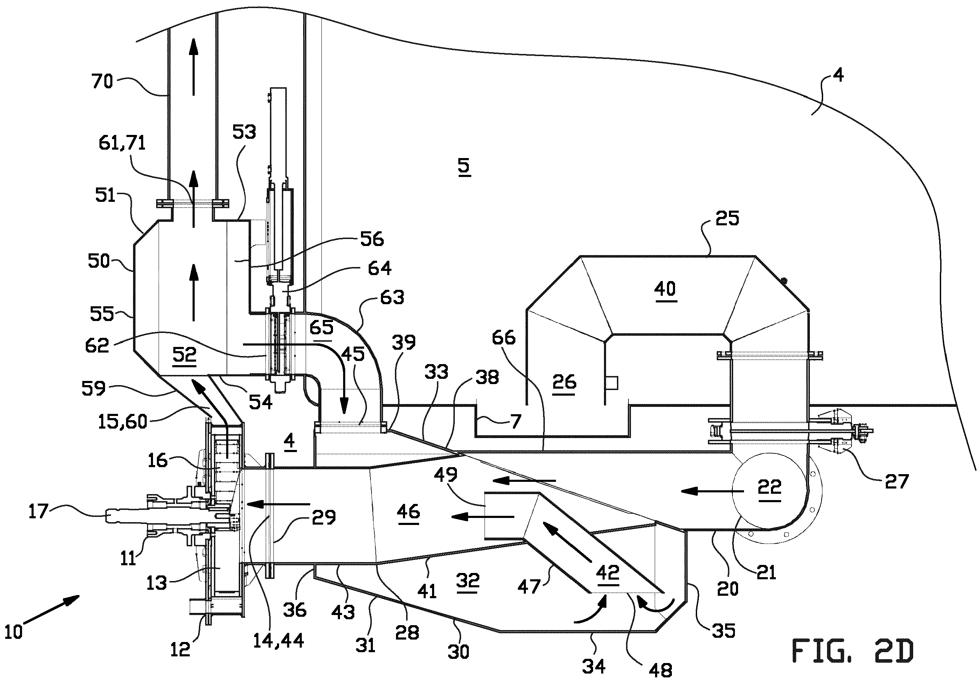

When most or all of the air is evacuated from the external hose, the agricultural slurry from the manure pit is drawn through the external hose and through the inlet port 22 into the suction channel 46. Inside the suction channel 46 the slurry from the external hose is added to and mixed with the priming fluid in the priming circuit. The volume of priming fluid, or priming fluid mixed with agricultural slurry, or agricultural slurry in the agricultural slurry pumping arrangement 10 now increases whereby the level of fluid inside the buffer chamber 52 of the buffer vessel 50 and/or inside the priming chamber 32 of the priming vessel 30 rises. When the slurry reaches the second buffer outlet 61 it flows or is pumped through the pressure conduit 70 and into the main tank 2 to fill the main tank chamber 5 with the agricultural slurry. As best shown in figure 2D the centrifugal pump 11 keeps pumping the priming fluid or agricultural slurry through the priming circuit while the agricultural slurry pumping arrangement 10 draws agricultural slurry through the inlet port 22 from the manure pit.

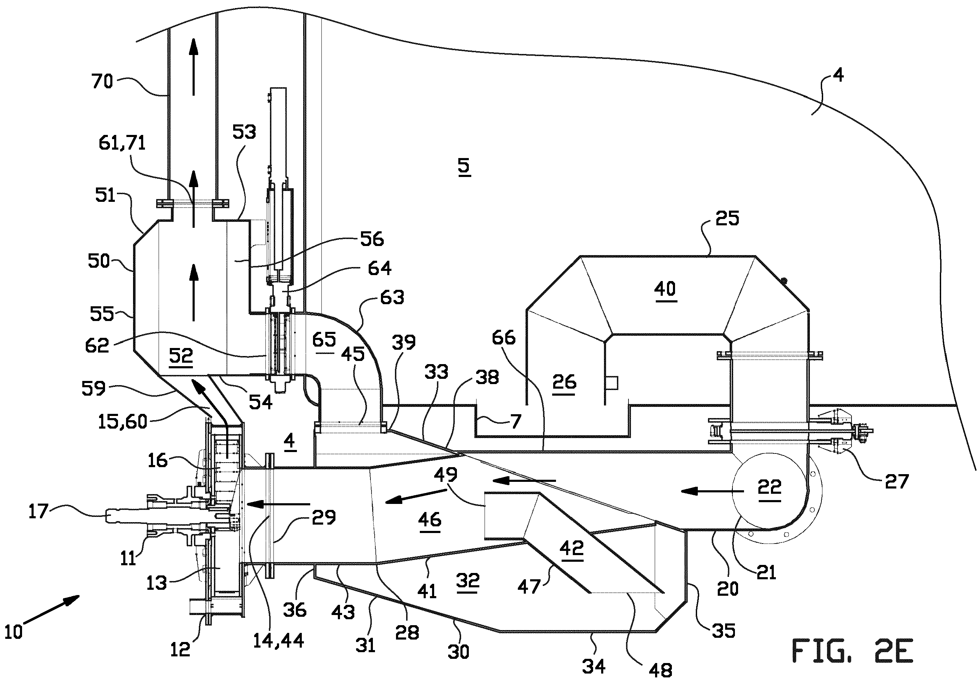

When the air is evacuated from the agricultural slurry pumping arrangement 10 and/or when the filling of the main tank chamber 5 by the agricultural slurry pumping arrangement 10 has commenced, the priming valve 64 can be closed to close the fluid connection between the priming chamber 32 and the buffer chamber 52. As best shown in figure 2E, hereby no fluid can flow from the buffer vessel 50 to the priming vessel 30, and the pumping of the priming fluid or agricultural slurry through the priming circuit by the centrifugal pump 11 is stopped or blocked. As a result all the agricultural slurry that is pumped by the centrifugal pump 11 from the manure pit flows to the main tank 2 to fill the main tank chamber 5. Closing the priming valve 64 increases the overall pump efficiency of the agricultural slurry pumping arrangement 10 and reduces the filling time of the main tank chamber 5 of the main tank 2.

When the main tank chamber 5 of the main tank 2 is properly filled with agricultural slurry, the inlet valve 23 and therewith the inlet port 22 is closed, and the centrifugal pump 11 is switched off. After disconnecting the external hose the tractor pulls the tanker 1 to the agricultural land. At the agricultural land the tractor starts driving along the agricultural land and the centrifugal pump 11 is started by driving the driveshaft 17 by the tractor. The inlet valve 23 and therewith the inlet port 22 is closed. The tank inlet valve 27 is open so that the main tank chamber 5 of the main tank 2 is in fluid communication with the pump inlet 14, through the tank suction channel 40 and the suction channel 46. The two-way valve 80 is switched to the second mode so that the buffer chamber 52 is in fluid communication with the external arrangement through the pressure pipe 70 and the two-way valve 80. The priming valve 64 can be open or closed, preferably the priming valve 64 is closed.

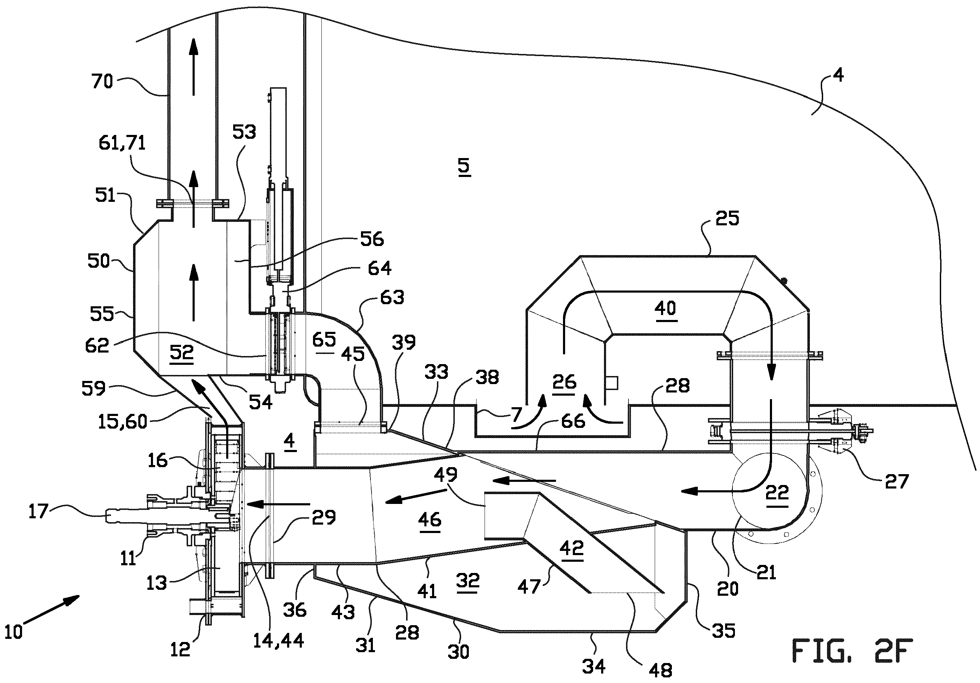

As best shown in figure 2F the centrifugal pump 11 draws in agricultural slurry from the main tank chamber 5 of the main tank 2 through the tank suction channel 40 and the suction channel 46 of the suction conduit 20. As the main tank 2 is located at a higher level than the pump inlet 14 the agricultural slurry will flow to the pump inlet 14 by gravity. The pump chamber 13 will be filled with agricultural slurry. The centrifugal pump 11 then pumps the agricultural slurry through the buffer chamber 52 of the buffer vessel 50 and through the pressure conduit 70 to the manure spreader at the back of the tanker 1.

When the tank 2 is empty, air enters the tank suction inlet 26 and the centrifugal pump 11 is stopped. The agricultural slurry that is still inside the buffer vessel 50, inside the pressure conduit 70 and/or inside the priming conduit 63 can flow back to the priming vessel 30 by gravity in order to be the priming fluid for the next filling operation of the agricultural slurry pumping arrangement 10 of the tanker 1. The agricultural slurry can either flow in a return direction through the pump chamber 13 or through the open priming valve 64 of the priming conduit 63. As explained above the size of the buffer chamber 52 is configured such that it can hold an amount of priming fluid that is sufficient to fill the priming chamber 32 and the suction channel 46 to a level that is sufficient for priming the centrifugal pump 11. In other words the amount of agricultural slurry inside the buffer chamber 52 is sufficient to at least partially fill the priming chamber 32, the suction channel 46, the head channel 42, and the pump chamber 13 of the centrifugal pump 11 with agricultural slurry. Preferably, the amount of agricultural slurry inside the buffer chamber 52 is sufficient to fill the priming chamber 32 to a level at which the pump chamber 13 that is in fluid communication with the priming chamber 32 is fully filled with the agricultural slurry.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Agricultural slurry pumping arrangement (10) for filling a tank (2) of a tanker (1) with an agricultural slurry, wherein the pumping arrangement (10) comprises
a centrifugal pump (11) having an impellor (16), a pump inlet (14) and a pump outlet (15),
a suction conduit (20) comprising a suction conduit outlet (44) in fluid communication with the pump inlet (14), a closeable inlet port (22) configured to be in fluid communication with an external agricultural slurry source, and a suction channel (46) extending between the suction conduit outlet (44) and the inlet port (22),
a priming vessel (30) that bounds a priming chamber (32) for holding a priming fluid, wherein the priming chamber (32) is in fluid communication with the suction channel (46),
a buffer vessel (50) separate from the priming vessel (30), wherein the buffer vessel (50) bounds a buffer chamber (52) for buffering the priming fluid, wherein the buffer vessel (50) comprises a buffer inlet (60) in fluid communication with the pump outlet (15), a first buffer outlet (62) that is in fluid communication with the priming chamber (32), and a second buffer outlet (61) that is configured to be in fluid communication with the tank (2), wherein the second outlet (61) extends above the first outlet (62), and wherein the buffer chamber (52) extends above the priming chamber (32),
wherein the centrifugal pump (11), the buffer vessel (50), the priming vessel (30), and the suction conduit (20) define a priming circuit, and the agricultural slurry pumping arrangement (10) is configured to prime the centrifugal pump (11) by pumping the priming fluid by the centrifugal pump (11) through the priming circuit, thereby generating an under pressure within the suction channel (46),
wherein the buffer chamber (52) and the priming chamber (32) are dimensioned to contain an amount of priming fluid that is sufficient for priming the centrifugal pump (11), at least during priming of the centrifugal pump (11).

2. Agricultural slurry pumping arrangement (10) according to claim 1, comprising a priming conduit (63) that forms a priming channel (65) between the first buffer outlet (62) and the priming chamber (32), and a priming valve (64) for opening and closing the priming channel (65).

3. Agricultural slurry pumping arrangement (10) according to any one of the preceding claims, wherein the priming vessel (30) comprises a priming inlet (45) towards the priming chamber (32), wherein the priming inlet (45) is located at a top side (39) of the priming chamber (32).

4. Agricultural slurry pumping arrangement (10) according to claims 2 and 3, wherein the priming conduit (63) is connected to the priming inlet (45).

5. Agricultural slurry pumping arrangement (10) according to any one of the preceding claims, wherein the suction conduit (20) extends through the priming vessel (30).

6. Agricultural slurry pumping arrangement (10) according to any one of the preceding claims, comprising a head conduit (47), wherein the head conduit (47) comprises a head inlet (48) that debouches in the priming chamber (32), a head outlet (49) that debouches in the suction channel (46), and a head channel (42) extending between the head inlet (48) and the head outlet (49).

7. Agricultural slurry pumping arrangement (10) according to claim 6, wherein the head conduit outlet (49) faces towards the pump inlet (14).

8. Agricultural slurry pumping arrangement (10) according to claim 6 or 7, wherein the head inlet (48) is located under the suction conduit (20), in a lower part of the priming chamber (32).

9. Agricultural slurry pumping arrangement (10) according to any one of the claims 6-8, wherein the head outlet (49) extends freely inside and is surrounded by the suction conduit (20).

10. Agricultural slurry pumping arrangement (10) according to any one of the claims 6-9, wherein the head conduit (47) extends through the priming chamber (32) as from the suction conduit (20).

11. Agricultural slurry pumping arrangement (10) according to any one of the claims 6-10, wherein the head conduit (47) is enclosed inside the priming chamber (32).

12. Agricultural slurry pumping arrangement (10) according to any one of the preceding claims, wherein the buffer vessel (50) and the priming vessel (30) are located outside the tank (2).

13. Agricultural slurry pumping arrangement (10) according to any one of the preceding claims, wherein transverse to a flow direction from the buffer inlet (60) to the second buffer outlet (61), the buffer chamber (52) has a larger flow area or inner dimensions than the buffer inlet (60) and the second buffer outlet (61).

14. Method for filling a tank (2) of a tanker (1) using an agricultural slurry pumping arrangement (10), wherein the agricultural slurry pumping arrangement (10) comprises
a centrifugal pump (11) having an impellor (16), a pump inlet (14) and a pump outlet (15),
a suction conduit (20) comprising a suction conduit outlet (44) in fluid communication with the pump inlet (14), a closeable inlet port (22) configured to be in fluid communication with an external agricultural slurry source, and a suction channel (46) extending between the suction conduit outlet (44) and the inlet port (22),
a priming vessel (30) that bounds a priming chamber (32) for holding a priming fluid, wherein the priming chamber (32) is in fluid communication with the suction channel (46),
a buffer vessel (50) separate from the priming vessel (30), wherein the buffer vessel (50) bounds a buffer chamber (52) for buffering the priming fluid, wherein the buffer vessel (50) comprises a buffer inlet (60) in fluid communication with the pump outlet (15), a first buffer outlet (62) that is in fluid communication with the priming chamber (32), and a second buffer outlet (61) that is configured to be in fluid communication with the tank (2), wherein the second outlet (61) extends above the first outlet (62), and wherein the buffer chamber (52) extends above the priming chamber (32),
wherein the centrifugal pump (11), the buffer vessel (50), the priming vessel (30), and the suction conduit (20) define a priming circuit, and the pumping arrangement (10) is configured to prime the centrifugal pump (11) by pumping the priming fluid by the centrifugal pump (11) through the priming circuit, thereby generating an under pressure within the suction channel (46),
wherein the method comprises
by the centrifugal pump (11), starting and perpetuating a priming fluid circulation by pumping the priming fluid through the priming circuit to maintain an under pressure at the inlet port (22),
in the buffer chamber (52), buffering an amount of priming fluid that is sufficient to prevent air to enter the priming chamber (32) via the first buffer outlet (62), and in the priming chamber (32), keeping an amount of priming fluid that is sufficient to prevent air in the priming chamber (32) to enter the suction channel (46).

15. Method according to claim 14, wherein the agricultural slurry pumping arrangement (10) comprises a priming conduit (63) that forms a priming channel (65) between the first buffer outlet (62) and the priming chamber (32), and a priming valve (64) for opening and closing the priming channel (65), wherein the method comprises the starting and perpetuating the priming fluid circulation with the priming valve (64) open, and subsequently closing the priming valve (64) when air is evacuated from the suction channel (46).

16. Method according to claim 14 or 15, wherein the priming fluid is a remainder of an agricultural slurry that was pumped in a previous pumping cycle.

## Patentansprüche

1. Pumpanordnung (10) für landwirtschaftliche Gülle zum Befüllen eines Tanks (2) eines Tankwagens (1) mit landwirtschaftlicher Gülle, wobei die Pumpanordnung (10) aufweist:
eine Kreiselpumpe (11) mit einem Laufrad (16), einem Pumpeneinlass (14) und einem Pumpenauslass (15);
eine Saugleitung (20) mit einem Saugleitungsauslass (44), der in Fluidverbindung mit dem Pumpeneinlass (14) steht, einer verschließbaren Einlassöffnung (22), die derart konfiguriert ist, dass sie in Fluidverbindung mit einer externen landwirtschaftlichen Güllequelle steht, und einem sich zwischen dem Saugleitungsauslass (44) und der Einlassöffnung (22) erstreckenden Saugkanal (46);
einen Vorfüllbehälter (30), der eine Vorfüllkammer (32) zum Aufnehmen eines Vorfüllfluids begrenzt, wobei die Vorfüllkammer (32) mit dem Saugkanal (46) in Fluidverbindung steht;
einen vom Vorfüllbehälter (30) getrennten Pufferbehälter (50), wobei der Pufferbehälter (50) eine Pufferkammer (52) zum Puffern des Vorfüllfluids begrenzt, wobei der Pufferbehälter (50) einen Puffereinlass (60), der mit dem Pumpenauslass (15) in Fluidverbindung steht, einen ersten Pufferauslass (62), der mit der Vorfüllkammer (32) in Fluidverbindung steht, und einen zweiten Pufferauslass (61) aufweist, der derart konfiguriert ist, dass er mit dem Tank (2) in Fluidverbindung steht, wobei sich der zweite Auslass (61) oberhalb des ersten Auslasses (62) erstreckt, und wobei sich die Pufferkammer (52) oberhalb der Vorfüllkammer (32) erstreckt,
wobei die Kreiselpumpe (11), der Pufferbehälter (50), der Vorfüllbehälter (30) und die Saugleitung (20) einen Ansaugkreislauf bilden, und wobei die Pumpanordnung (10) für landwirtschaftliche Gülle dafür konfiguriert ist, die Kreiselpumpe (11) vorzufüllen, indem die Kreiselpumpe (11) das Vorfüllfluid durch den Ansaugkreislauf pumpt, wodurch ein Unterdruck innerhalb des Saugkanals (46) erzeugt wird,
wobei die Pufferkammer (52) und die Vorfüllkammer (32) so dimensioniert sind, dass sie eine Menge an Vorfüllfluid enthalten, die ausreicht, um die Kreiselpumpe (11) zumindest während des Ansaugvorgangs der Kreiselpumpe (11) vorzufüllen.

2. Pumpanordnung (10) für landwirtschaftliche Gülle nach Anspruch 1, aufweisend eine Ansaugleitung (63), die einen Ansaugkanal (65) zwischen dem ersten Pufferauslass (62) und der Vorfüllkammer (32) bildet, und ein Ansaugventil (64) zum Öffnen und Schließen des Ansaugkanals (65).

3. Pumpanordnung (10) für landwirtschaftliche Gülle nach einem der vorangehenden Ansprüche, wobei der Vorfüllbehälter (30) einen Ansaugeinlass (45) zur Vorfüllkammer (32) hin aufweist, wobei sich der Ansaugeinlass (45) an einer Oberseite (39) der Vorfüllkammer (32) befindet.

4. Pumpanordnung (10) für landwirtschaftliche Gülle nach Anspruch 2 oder 3, wobei die Ansaugleitung (63) mit dem Ansaugeinlass (45) verbunden ist.

5. Pumpanordnung (10) für landwirtschaftliche Gülle nach einem der vorangehenden Ansprüche, wobei sich die Saugleitung (20) durch den Vorfüllbehälter (30) erstreckt.

6. Pumpanordnung (10) für landwirtschaftliche Gülle nach einem der vorangehenden Ansprüche, aufweisend eine Vorfüllleitung (47), wobei die Vorfüllleitung (47) einen Vorfüllleitungseinlass (48), der in die Vorfüllkammer (32) mündet, einen Vorfüllleitungsauslass (49), der in den Saugkanal (46) mündet, und einen sich zwischen dem Vorfüllleitungseinlass (48) und dem Vorfüllleitungsauslass (49) erstreckenden Vorfüllkanal (42) aufweist.

7. Pumpanordnung (10) für landwirtschaftliche Gülle nach Anspruch 6, wobei der Vorfüllleitungsauslass (49) dem Pumpeneinlass (14) zugewandt ist.

8. Pumpanordnung (10) für landwirtschaftliche Gülle nach Anspruch 6 oder 7, wobei sich der Vorfüllleitungseinlass (48) unterhalb der Saugleitung (20) in einem unteren Teil der Vorfüllkammer (32) befindet.

9. Pumpanordnung (10) für landwirtschaftliche Gülle nach einem der Ansprüche 6 bis 8, wobei sich der Vorfüllleitungsauslass (49) frei im Inneren erstreckt und von der Saugleitung (20) umgeben ist.

10. Pumpanordnung (10) für landwirtschaftliche Gülle nach einem der Ansprüche 6 bis 9, wobei sich die Vorfüllleitung (47) von der Saugleitung (20) ausgehend durch die Vorfüllkammer (32) erstreckt.

11. Pumpanordnung (10) für landwirtschaftliche Gülle nach einem der Ansprüche 6 bis 10, wobei die Vorfüllleitung (47) innerhalb der Vorfüllkammer (32) eingeschlossen ist.

12. Pumpanordnung (10) für landwirtschaftliche Gülle nach einem der vorangehenden Ansprüche, wobei der Pufferbehälter (50) und der Vorfüllbehälter (30) außerhalb des Tanks (2) angeordnet sind.

13. Pumpanordnung (10) für landwirtschaftliche Gülle nach einem der vorangehenden Ansprüche, wobei quer zu einer Strömungsrichtung vom Puffereinlass (60) zum zweiten Pufferauslass (61) die Pufferkammer (52) eine größere Durchflussfläche oder größere Innenabmessungen aufweist als der Puffereinlass (60) und der zweite Pufferauslass (61).

14. Verfahren zum Befüllen eines Tanks (2) eines Tankwagens (1) unter Verwendung einer Pumpanordnung (10) für landwirtschaftliche Gülle, wobei die Pumpanordnung (10) für landwirtschaftliche Gülle aufweist:
eine Kreiselpumpe (11) mit einem Laufrad (16), einem Pumpeneinlass (14) und einem Pumpenauslass (15);
eine Saugleitung (20) mit einem Saugleitungsauslass (44), der in Fluidverbindung mit dem Pumpeneinlass (14) steht, einer verschließbaren Einlassöffnung (22), die derart konfiguriert ist, dass sie in Fluidverbindung mit einer externen landwirtschaftlichen Güllequelle steht, und einem sich zwischen dem Saugleitungsauslass (44) und der Einlassöffnung (22) erstreckenden Saugkanal (46);
einen Vorfüllbehälter (30), der eine Vorfüllkammer (32) zum Aufnehmen eines Vorfüllfluids begrenzt, wobei die Vorfüllkammer (32) mit dem Saugkanal (46) in Fluidverbindung steht;
einen vom Vorfüllbehälter (30) getrennten Pufferbehälter (50), wobei der Pufferbehälter (50) eine Pufferkammer (52) zum Puffern des Vorfüllfluids begrenzt, wobei der Pufferbehälter (50) einen Puffereinlass (60), der mit dem Pumpenauslass (15) in Fluidverbindung steht, einen ersten Pufferauslass (62), der mit der Vorfüllkammer (32) in Fluidverbindung steht, und einen zweiten Pufferauslass (61) aufweist, der derart konfiguriert ist, dass er mit dem Tank (2) in Fluidverbindung steht, wobei sich der zweite Auslass (61) oberhalb des ersten Auslasses (62) erstreckt und wobei sich die Pufferkammer (52) oberhalb der Vorfüllkammer (32) erstreckt,
wobei die Kreiselpumpe (11), der Pufferbehälter (50), der Vorfüllbehälter (30) und die Saugleitung (20) einen Ansaugkreislauf bilden, und wobei die Pumpanordnung (10) dafür konfiguriert ist, die Kreiselpumpe (11) anzusaugen, indem die Kreiselpumpe (11) das Vorfüllfluid durch den Ansaugkreislauf pumpt, wodurch ein Unterdruck im Ansaugkanal (46) erzeugt wird,
wobei das Verfahren aufweist:
Starten und Aufrechterhalten einer Vorfüllfluidzirkulation durch die Kreiselpumpe (11) durch Pumpen des Vorfüllfluids durch den Ansaugkreislauf, um einen Unterdruck an der Einlassöffnung (22) aufrechtzuerhalten;
Puffern einer Menge an Vorfüllfluid, die ausreicht, um zu verhindern, dass Luft über den ersten Pufferauslass (62) in die Vorfüllkammer (32) eintritt, in der Pufferkammer (52), und Halten einer Menge an Vorfüllfluid, die ausreicht, um zu verhindern, dass Luft aus der Vorfüllkammer (32) in den Ansaugkanal (46) eintritt, in der Vorfüllkammer (32).

15. Verfahren nach Anspruch 14, wobei die Pumpanordnung (10) für landwirtschaftliche Gülle eine Ansaugleitung (63), die einen Ansaugkanal (65) zwischen dem ersten Pufferauslass (62) und der Vorfüllkammer (32) bildet, und ein Ansaugventil (64) zum Öffnen und Schließen des Ansaugkanals (65) aufweist, wobei das Verfahren das Starten und Aufrechterhalten der Vorfüllfluidzirkulation bei geöffnetem Ansaugventil und das anschließende Schließen des Ansaugventils (64) aufweist, wenn Luft aus dem Ansaugkanal (46) entfernt ist.

16. Verfahren nach Anspruch 14 oder 15, wobei das Vorfüllfluid ein Rest einer landwirtschaftlichen Gülle ist, die in einem vorherigen Pumpzyklus gepumpt wurde.

## Revendications

1. - Agencement de pompage de boue agricole (10) destiné à remplir une citerne (2) d'un véhicule-citerne (1) avec une boue agricole, dans lequel l'agencement de pompage (10) comprend
une pompe centrifuge (11) comportant un impulseur (16), une entrée de pompe (14) et une sortie de pompe (15),
un conduit d'aspiration (20) comprenant une sortie de conduit d'aspiration (44) en communication fluidique avec l'entrée de pompe (14), un orifice d'entrée obturable (22) configuré pour être en communication fluidique avec une source externe de boue agricole, et un canal d'aspiration (46) s'étendant entre la sortie de conduit d'aspiration (44) et l'orifice d'entrée (22),
un réservoir d'amorçage (30) qui délimite une chambre d'amorçage (32) destinée à contenir un fluide d'amorçage, la chambre d'amorçage (32) étant en communication fluidique avec le canal d'aspiration (46),
un réservoir tampon (50) séparé du réservoir d'amorçage (30), le réservoir tampon (50) délimitant une chambre tampon (52) destinée à tamponner le fluide d'amorçage, le réservoir tampon (50) comprenant une entrée de tampon (60) en communication fluidique avec la sortie de pompe (15), une première sortie de tampon (62) qui est en communication fluidique avec la chambre d'amorçage (32), et une seconde sortie de tampon (61) qui est configurée pour être en communication fluidique avec la citerne (2), la seconde sortie (61) s'étendant au-dessus de la première sortie (62), et la chambre tampon (52) s'étendant au-dessus de la chambre d'amorçage (32),
dans lequel la pompe centrifuge (11), le réservoir tampon (50), le réservoir d'amorçage (30) et le conduit d'aspiration (20) définissent un circuit d'amorçage, et l'agencement de pompage de boue agricole (10) est configuré pour amorcer la pompe centrifuge (11) en pompant le fluide d'amorçage par la pompe centrifuge (11) à travers le circuit d'amorçage, générant ainsi une dépression à l'intérieur du canal d'aspiration (46),
dans lequel la chambre tampon (52) et la chambre d'amorçage (32) sont dimensionnées pour contenir une quantité de fluide d'amorçage qui est suffisante pour amorcer la pompe centrifuge (11), au moins pendant l'amorçage de la pompe centrifuge (11).

2. - Agencement de pompage de boue agricole (10) selon la revendication 1, comprenant un conduit d'amorçage (63) qui forme un canal d'amorçage (65) entre la première sortie de tampon (62) et la chambre d'amorçage (32), et une vanne d'amorçage (64) pour ouvrir et fermer le canal d'amorçage (65).

3. - Agencement de pompage de boue agricole (10) selon l'une quelconque des revendications précédentes, dans lequel le réservoir d'amorçage (30) comprend une entrée d'amorçage (45) vers la chambre d'amorçage (32), l'entrée d'amorçage (45) étant située sur un côté supérieur (39) de la chambre d'amorçage (32).

4. - Agencement de pompage de boue agricole (10) selon les revendications 2 et 3, dans lequel le conduit d'amorçage (63) est relié à l'entrée d'amorçage (45).

5. - Agencement de pompage de boue agricole (10) selon l'une quelconque des revendications précédentes, dans lequel le conduit d'aspiration (20) s'étend à travers le réservoir d'amorçage (30).

6. - Agencement de pompage de boue agricole (10) selon l'une quelconque des revendications précédentes, comprenant un conduit de tête (47), le conduit de tête (47) comprenant une entrée de tête (48) qui débouche dans la chambre d'amorçage (32), une sortie de tête (49) qui débouche dans le canal d'aspiration (46), et un canal de tête (42) s'étendant entre l'entrée de tête (48) et la sortie de tête (49).

7. - Agencement de pompage de boue agricole (10) selon la revendication 6, dans lequel la sortie de conduit de tête (49) est tournée vers l'entrée de pompe (14).

8. - Agencement de pompage de boue agricole (10) selon la revendication 6 ou 7, dans lequel l'entrée de tête (48) est située sous le conduit d'aspiration (20), dans une partie inférieure de la chambre d'amorçage (32).

9. - Agencement de pompage de boue agricole (10) selon l'une quelconque des revendications 6 à 8, dans lequel la sortie de tête (49) s'étend librement à l'intérieur et est entourée par le conduit d'aspiration (20).

10. - Agencement de pompage de boue agricole (10) selon l'une quelconque des revendications 6 à 9, dans lequel le conduit de tête (47) s'étend à travers la chambre d'amorçage (32) à partir du conduit d'aspiration (20).

11. - Agencement de pompage de boue agricole (10) selon l'une quelconque des revendications 6 à 10, dans lequel le conduit de tête (47) est enfermé à l'intérieur de la chambre d'amorçage (32).

12. - Agencement de pompage de boue agricole (10) selon l'une quelconque des revendications précédentes, dans lequel le réservoir tampon (50) et le réservoir d'amorçage (30) sont situés à l'extérieur de la citerne (2).

13. - Agencement de pompage de boue agricole (10) selon l'une quelconque des revendications précédentes, dans lequel, transversalement à une direction d'écoulement allant de l'entrée de tampon (60) à la seconde sortie de tampon (61), la chambre tampon (52) présente une section d'écoulement ou des dimensions intérieures plus grandes que l'entrée de tampon (60) et la seconde sortie de tampon (61).

14. - Procédé de remplissage d'une citerne(2) d'un véhicule-citerne (1) à l'aide d'un agencement de pompage de boue agricole (10), dans lequel l'agencement de pompage de boue agricole (10) comprend
une pompe centrifuge (11) comportant un impulseur (16), une entrée de pompe (14) et une sortie de pompe (15),
un conduit d'aspiration (20) comprenant une sortie de conduit d'aspiration (44) en communication fluidique avec l'entrée de pompe (14), un orifice d'entrée obturable (22) configuré pour être en communication fluidique avec une source externe de boue agricole, et un canal d'aspiration (46) s'étendant entre la sortie de conduit d'aspiration (44) et l'orifice d'entrée (22),
un réservoir d'amorçage (30) qui délimite une chambre d'amorçage (32) destinée à contenir un fluide d'amorçage, la chambre d'amorçage (32) étant en communication fluidique avec le canal d'aspiration (46),
un réservoir tampon (50) séparé du réservoir d'amorçage (30), le réservoir tampon (50) délimitant une chambre tampon (52) destinée à tamponner le fluide d'amorçage, le réservoir tampon (50) comprenant une entrée de tampon (60) en communication fluidique avec la sortie de pompe (15), une première sortie de tampon (62) qui est en communication fluidique avec la chambre d'amorçage (32), et une seconde sortie de tampon (61) qui est configurée pour être en communication fluidique avec la citerne (2), la seconde sortie (61) s'étendant au-dessus de la première sortie (62), et la chambre tampon (52) s'étendant au-dessus de la chambre d'amorçage (32),
dans lequel la pompe centrifuge (11), le réservoir tampon (50), le réservoir d'amorçage (30) et le conduit d'aspiration (20) définissent un circuit d'amorçage, et l'agencement de pompage (10) est configuré pour amorcer la pompe centrifuge (11) en pompant le fluide d'amorçage par la pompe centrifuge (11) à travers le circuit d'amorçage, générant ainsi une dépression à l'intérieur du canal d'aspiration (46),
dans lequel le procédé comprend
par la pompe centrifuge (11), démarrer et maintenir une circulation de fluide d'amorçage en pompant le fluide d'amorçage à travers le circuit d'amorçage afin de maintenir une dépression à l'orifice d'entrée (22),
dans la chambre tampon (52), tamponner une quantité de fluide d'amorçage qui suffisante pour empêcher de l'air d'entrer dans la chambre d'amorçage (32) par l'intermédiaire de la première sortie de tampon (62), et dans la chambre d'amorçage (32), conserver une quantité de fluide d'amorçage qui est suffisante pour empêcher de l'air présent dans la chambre d'amorçage (32) d'entrer dans le canal d'aspiration (46).

15. - Procédé selon la revendication 14, dans lequel l'agencement de pompage de boue agricole (10) comprend un conduit d'amorçage (63) qui forme un canal d'amorçage (65) entre la première sortie de tampon (62) et la chambre d'amorçage (32), et une vanne d'amorçage (64) destinée à ouvrir et fermer le canal d'amorçage (65), dans lequel le procédé comprend le démarrage et le maintien de la circulation de fluide d'amorçage avec la vanne d'amorçage (64) ouverte, puis la fermeture de la vanne d'amorçage (64) lorsque de l'air est évacué du canal d'aspiration (46).

16. - Procédé selon la revendication 14 ou 15, dans lequel le fluide d'amorçage est un résidu d'une boue agricole qui a été pompée lors d'un cycle de pompage précédent.
